# EUROPÄISCHE PATENTANMELDUNG

(11) **EP 4 664 143 A1**
(43) Veröffentlichungstag der Anmeldung: **17.12.2025**
(21) Anmeldenummer: 25181704.5
(22) Anmeldetag: 10.06.2025
(51) Int. Cl.: G01S 7/03, G01S 7/04, G01S 13/931, G01S 13/42, G01S 13/34, H01Q 3/22, H01Q 21/00, H01Q 21/08, H01Q 1/32, B60W 50/16, B62J 6/24, B62J 45/41, B62J 50/22, G01S 13/02

(54) **VERFAHREN UND VORRICHTUNG ZUR ÜBERWACHUNG EINES RÜCKSEITIGEN BEREICHES EINES FAHRZEUGS, INSBESONDERE EINES ZWEIRADS**

(30) Priorität: 14.06.2024 DE 102024116800
(71) Anmelder: Fraunhofer-Gesellschaft zur Förderung der angewandten Forschung e.V., 80686 München (DE)
(72) Erfinder: Shoykhetbrod, Alex, 53343 Wachtberg (DE); Brauns, Ralf, 53343 Wachtberg (DE); Krebs, Christian, 53343 Wachtberg (DE); Nowok, Sandra, 53343 Wachtberg (DE)
(74) Vertreter: Gagel, Roland

(57) **Zusammenfassung**

Die vorliegende Erfindung betrifft ein Verfahren und eine Vorrichtung zur Überwachung eines rückseitigen Bereiches eines Fahrzeugs (1), das einen Lenkerbügel mit Lenkergriffen aufweist, mittels Radar. Am Fahrzeug (1) wird hierzu ein frequenzschwenkendes Radar (2) zur Abtastung des rückseitigen Bereiches eingesetzt, das mit einer vorzugsweise am Lenkerbügel angeordneten Signalisierungseinrichtung verbunden ist. Das Radargerät (5, 6) weist einen Radarkanal für die Aussendung von Radarsignalen auf, der sich auf mehrere Antennenleitungen (4) verzweigt, die sich in ihrer Länge um ein Vielfaches der Mittenwellenlänge des verwendeten Frequenzbereichs unterscheiden. Bei Erfassung eines sich nähernden Objekts (3) wird dem Fahrer des Fahrzeugs über die Signalisierungseinrichtung eine Abstandsinformation und ein Winkelbereich vermittelt, unter dem sich das Objekt (3) von der Rückseite nähert. Vorzugsweise erfolgt dies über eine haptische Signalisierung durch Vibration eines oder beider Lenkergriffe.

## Beschreibung

### Technisches Anwendungsgebiet

Die vorliegende Erfindung betrifft ein Verfahren zur Überwachung eines rückseitigen Bereiches eines Fahrzeugs, das einen Lenkerbügel mit Lenkergriffen aufweist, mittels Radar, bei dem ein Radargerät am Fahrzeug eingesetzt wird, das ein frequenzschwenkendes Radar zur Abtastung des rückseitigen Bereiches einsetzt und mit einer Signalisierungseinrichtung verbunden ist. Die Erfindung betrifft auch ein zur Durchführung des Verfahrens ausgebildetes Radargerät sowie ein Fahrzeug mit Radargerät und Signalisierungseinrichtung, das für die Durchführung des Verfahrens eingerichtet ist.

Vor allem Fahrradfahrer sind im Straßenverkehr besonders gefährdet, da sie den rückseitigen Bereich während der Fahrt nur schwer einsehen oder überwachen können, sodass sie von hinten herannahende andere Fahrzeuge nur schwer oder gar nicht rechtzeitig erkennen.

Die Aufgabe der vorliegenden Erfindung besteht darin, ein Verfahren und eine Vorrichtung zur Überwachung des rückseitigen Bereiches eines Fahrzeugs, das einen Lenkerbügel mit Lenkergriffen aufweist, anzugeben, das sich für Fahrräder eignet und kostengünstig realisierbar ist.

### Darstellung der Erfindung

Die Aufgabe wird mit dem Verfahren und dem Radargerät gemäß den Patentansprüchen 1 und 7 gelöst. Patentanspruch 10 gibt ein für die Durchführung des Verfahrens eingerichtetes Fahrzeug an. Vorteilhafte Ausgestaltungen des Verfahrens, des Radargeräts sowie des Fahrzeugs sind Gegenstand der abhängigen Patentansprüche oder lassen sich der nachfolgenden Beschreibung sowie dem Ausführungsbeispiel entnehmen.

Das vorgeschlagene Verfahren bezieht sich auf Fahrzeuge, die einen Lenkerbügel mit Lenkergriffen aufweisen, also insbesondere Zweiräder oder Dreiräder, beispielsweise Fahrräder oder Roller, die auch elektrisch angetrieben oder unterstützt sein können. Vorzugsweise wird das Verfahren bei Fahrrädern ohne Tretunterstützung und bei elektrischen Fahrrädern mit Tretunterstützung und einer maximalen Geschwindigkeit von 25 km/h (Pedelecs) eingesetzt. Bei dem Verfahren wird ein Radargerät am Fahrzeug eingesetzt, das ein frequenzschwenkendes Radar zur Abtastung des rückseitigen Bereiches einsetzt. Das Radargerät weist bei dem vorgeschlagenen Verfahren einen Radarkanal für die Aussendung von Radarsignalen auf, der sich auf mehrere Antennenleitungen verzweigt, so dass eine parallele Einspeisung erfolgt, vorzugsweise auf eine Anzahl von 2ⁿ (n = 1, 2, ...). Die Antennenleitungen unterscheiden sich in ihrer Länge um ein Vielfaches der Mittenwellenlänge des Frequenzbereichs, über den die Radarsignale in der Frequenz moduliert werden. Je höher die Anzahl der Antennenelemente bzw. Antennenleitungen, desto höher ist die angulare Auflösung und die Empfindlichkeit des Systems. Die Entfernungsauflösung wird hierdurch jedoch reduziert. Somit ist es ein "Tradeoff" zwischen angularer- und Entfernungsauflösung. Der Empfang kann über die gleiche Antenne oder auch über eine getrennte Antenne erfolgen, wobei lediglich ein Empfangskanal erforderlich ist. Der Vorteil dieses Radargeräts liegt in der Fähigkeit, mit lediglich einem einzigen Kanal sowohl die Entfernungsals auch die Winkelmessung effizient und mit minimalem Rechenaufwand durchzuführen. Die parallele Einspeisung führt zu reduzierten Verlusten und einer gleichmäßigen Leistungsverteilung (stabileres Strahlungsdiagramm). Die parallele Einspeisung impliziert im Gegensatz zu einer seriellen Einspeisung keine resonante Struktur. Somit können größere Bandbreiten und ein größerer Scanwinkel erzielt werden.

Das Radargerät setzt für die Radarabtastung ein FMCW-Radar ein. Die Längenunterschiede der einzelnen Antennenleitungen werden dabei vorzugsweise so gewählt, dass sich ein rückseitiger Abtastbereich bzw. Abtastwinkel zwischen ±30° und ±50°, besonderes bevorzugt zwischen ±35° und ±45° ergibt. Das Radargerät ist bei dem vorgeschlagenen Verfahren mit einer Signalisierungseinrichtung verbunden, entweder über eine elektrische Leitung oder drahtlos durch eine geeignete Funkverbindung. Die Signalisierungseinrichtung ist vorzugsweise im Bereich des Lenkerbügels angeordnet. Während der Fahrt wird der rückseitige Bereich des Fahrzeugs mit dem frequenzschwenkenden Radar abgetastet und einem Fahrer des Fahrzeugs bei Erfassung eines sich von hinten nähernden Objekts über die Signalisierungseinrichtung eine Abstandsinformation und ein Winkelbereich vermittelt, unter dem sich das Objekt von der Rückseite nähert. Vorzugsweise werden nur drei unterschiedliche Winkelbereiche vermittelt, durch die eine Annäherung von links hinten, eine Annäherung von rechts hinten und eine direkten Annäherung von hinten, also weder von links noch von rechts, unterschieden werden können. Je nach gewählter Signalisierungseinrichtung können aber auch engere Winkelbereiche signalisiert werden. Unter der Abstandsinformation ist in der einfachsten Ausgestaltung nur eine Information darüber zu verstehen, ob sich das Objekt noch weiter entfernt oder schon näher am Fahrzeug befindet. Mit dem Radargerät kann zusätzlich auch die Geschwindigkeit des Objekts ermittelt und bei der Signalisierung berücksichtigt werden.

Das vorgeschlagene Verfahren nutzt ein Radargerät mit einer Frequenzschwenk-Technik in Verbindung mit einer parallelen Einspeisung. Die Antennenleitungen unterscheiden sich dabei in ihrer Länge um ein Vielfaches der Wellenlänge bei der Mittenfrequenz des Frequenzbereichs, über den die Radarsignale in der Frequenz moduliert werden. Bei dieser Frequenz strahlt das Antennenarray aus den mehreren Antennenleitungen geradeaus, bei entsprechender Anordnung des Radargeräts am Fahrzeug direkt bzw. senkrecht nach hinten. Ändert sich die Frequenz des in die Antennenleitungen eingespeisten Radarsignals, resultiert dies in einer Phasendifferenz zwischen den Antennenleitungen. Dies führt dazu, dass das Antennenarray in unterschiedliche Richtungen abtastet, also Radarsignale aussendet und wieder empfängt. Diese Phasenverschiebung wird genutzt, um Winkelinformationen über ein eventuell vorhandenes Objekt zu erfassen. Das Radargerät weist in der bevorzugten Ausgestaltung nur einen einzigen Kanal für den Empfang der Radarsignale auf, wodurch der Rechenaufwand für die Auswertung der Radarsignale und die Systemkomplexität reduziert werden. Damit lässt sich das Radargerät in kompakter Bauweise sowie einfach und kostengünstig realisieren. Dies gilt dann auch für das vorgeschlagene Verfahren, bei dem dieses Radargerät zum Einsatz kommt.

Die Signalisierung kann bei dem vorgeschlagenen Verfahren haptisch, optisch oder akustisch oder auch durch eine Kombination von zwei oder allen drei dieser Signalisierungstechniken erfolgen. Das Verfahren und das dabei eingesetzte Radargerät eignen sich besonders für die Verbesserung der Verkehrssicherheit von Fahrradfahrern, lassen sich jedoch auch bei anderen Fahrzeugen mit Lenkerbügel entsprechend einsetzen.

In der bevorzugten Ausgestaltung werden die Abstandsinformation und die Information über den Winkelbereich eines sich annähernden Objekts dem Fahrer haptisch vermittelt, vorzugsweise durch Vibration der Lenkergriffe. Auf diese Weise werden auch in der Hörleistung eingeschränkte Personen zuverlässig auf sich annähernde Objekte aufmerksam gemacht.

Bei einer Signalisierung durch Vibration der Lenkergriffe wird eine Annäherung des Objekts von der linken Rückseite durch Vibration des linken Lenkergriffes und eine Annäherung von der rechten Rückseite durch Vibration des rechten Lenkergriffes signalisiert. Kommt das Objekt senkrecht von hinten, also nicht von hinten links oder hinten rechts, so vibrieren vorzugsweise beide Lenkergriffe entsprechend. Die Abstandsinformation kann dabei durch die Vibrationsfrequenz oder die Vibrationsintensität vermittelt werden. Je näher sich das Objekt befindet, desto höher wird die Vibrationsfrequenz oder Vibrationsintensität gewählt. Geeignete Vibrationseinrichtungen bzw. Vibrationsmotoren sind dem Fachmann bekannt und auch kommerziell erhältlich.

Alternativ oder zusätzlich kann die Signalisierung auch durch Lichtquellen, beispielsweise durch LEDs, erfolgen, die im Bereich des Lenkerbügels angeordnet werden. Vorzugsweise befinden sich dabei ein oder mehrere dieser Lichtquellen links und rechts am oder im Bereich des Lenkerbügels. Auch hier kann bei Bedarf die Abstandsinformation durch eine Blinkfrequenz dieser Lichtquellen vermittelt werden. Die Annäherungsrichtung wird wie bei der oben beschriebenen haptischen Signalisierung wiederum durch Aufleuchten der entsprechend links oder rechts angeordneten Lichtquellen vermittelt.

In einer weiteren Ausgestaltung, die auch in Kombination mit einer oder mehreren der oben beschriebenen Ausgestaltungen realisiert werden kann, verbindet sich das Radargerät mit einer am Fahrzeug bereits integrierten Anzeigeeinrichtung (Display) oder mit einem Mobilgerät mit Anzeigeeinrichtung, das im Bereich des Lenkerbügels am Fahrzeug befestigt wird. Die relative Position des detektierten Objekts relativ zum Fahrzeug wird dann dem Fahrer, vorzugsweise über eine geeignete grafische Darstellung, an der Anzeigeeinrichtung dargestellt.

Ein entsprechend für die Durchführung des Verfahrens eingerichtetes Fahrzeug weist das nach hinten gerichtete Radargerät sowie eine Signalisierungseinrichtung im Bereich des Lenkerbügels auf. Das Radargerät kann bei einem Fahrrad beispielsweise an der Sattelstütze befestigt sein. Bei Nutzung einer haptischen Signalisierung sind im Lenkerbügel entsprechende Vibrationseinrichtungen im Bereich der Lenkergriffe integriert. Das Radargerät selbst weist in bekannter Weise einen Radarsender und einen Radarempfänger für die Erzeugung und den Empfang der Radarsignale über die Antennen des Radargeräts sowie eine Auswerteeinrichtung auf, beispielsweise in Form eines Mikroprozessors (Mikrocontroller, DSP), die die Radarsignale auswertet, um ein sich annäherndes Objekt zu erfassen und dessen relativen Abstand und Winkelbereich zu bestimmen. Das Radargerät verfügt auch über eine Übertragungseinheit, durch die diese Informationen an die Signalisierungseinrichtung übermittelt werden, die dann die entsprechende Signalisierung durchführt.

Das Radargerät kann in zwei Konfigurationen betrieben werden. In einer monostatischen Ausführung nutzen Sende- (TX) und Empfangskanal (RX) dieselbe Antenne gemeinsam. In einer bistatischen Ausführung sind Sende- (TX) und Empfangsantenne (RX) räumlich voneinander getrennt und arbeiten unabhängig. Das Radargerät weist in der bistatischen Ausführung also noch eine zusätzliche Antenne für den Empfang der reflektierten Radarsignale auf. Diese Antenne kann wie die Sendeantenne oder auch als einfachere Antenne ausgebildet sein.

Das Radargerät kann sowohl in linearer als auch in zirkularer Polarisation (Reduktion von Mehrfachreflexionen sowie Übersprechen von Sende- und Empfangskanal) ausgelegt werden.

### Kurze Beschreibung der Zeichnungen

Das vorgeschlagene Verfahren und das dabei einsetzbare Radargerät werden nachfolgend anhand eines Ausführungsbeispiels in Verbindung mit den Zeichnungen nochmals näher erläutert. Hierbei zeigen:
- Fig. 1: eine beispielhafte schematische Darstellung eines Fahrradfahrers und der durch das Radargerät erfolgenden Abtastung des rückseitigen Bereichs;
- Fig. 2: eine beispielhafte schematische Darstellung der unterschiedlichen Abstrahlrichtung bei drei unterschiedlichen Frequenzen;
- Fig. 3: eine schematische Darstellung eines Beispiels der Verzweigung der Antennenleitungen auf in diesem Beispiel acht Antennenleitungen bei dem eingesetzten Radargerät;
- Fig. 4: eine beispielhafte schematische Darstellung des Phasenhubs der einzelnen Antennenleitungen; und
- Fig. 5: eine schematische Darstellung des Radargeräts.

### Wege zur Ausführung der Erfindung

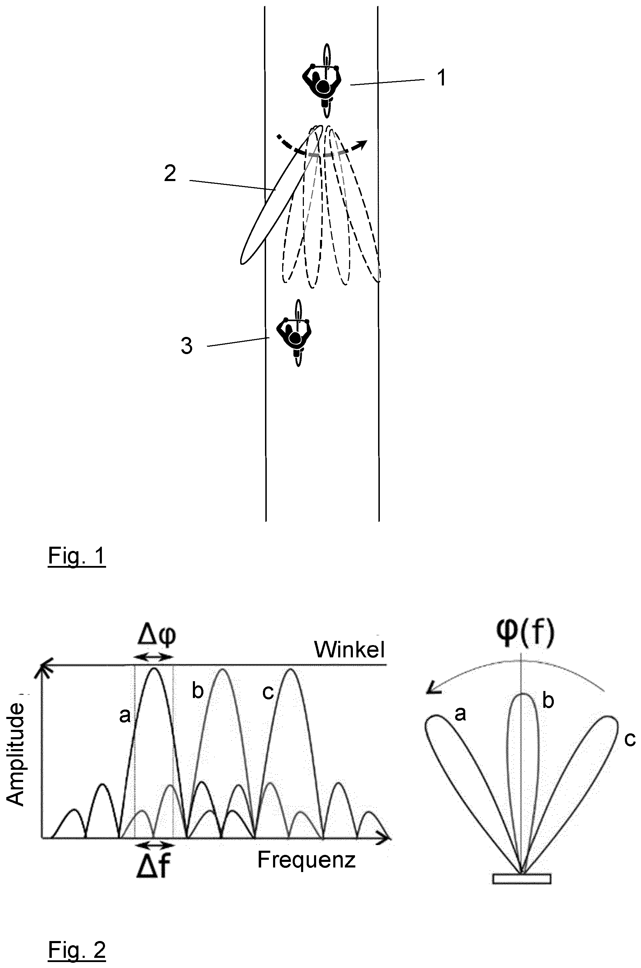

Figur 1 zeigt ein Beispiel für die Überwachung des rückseitigen Bereichs eines Fahrrads 1, bei dem sich hinter dem Fahrrad 1 ein weiteres Fahrrad 3 nähert. Das Radargerät an der Sattelstütze des Fahrrads 1 überwacht den rückseitigen Bereich dabei während der Fahrt ständig mittels Radar, wobei frequenzschwenkendes Radar eingesetzt wird, bei dem ein bestimmter Winkelbereich hinter dem Fahrrad ständig abgetastet wird. Dies ist in Figur 1 durch die dargestellte Radarkeule 2 und deren angedeutete Bewegung zu erkennen. Wird das weitere Fahrrad 3 durch das Radar erkannt, so wird dem Fahrer des vorderen Fahrrads 1 über eine Signalisierungseinrichtung eine Information darüber vermittelt, in welchem ungefähren Abstand - noch weiter weg oder schon nahe - sich dieses Objekt momentan befindet und auf welcher Seite es sich nähert.

Figur 2 zeigt stark schematisiert die Funktionsweise des frequenzschwenkenden Radars für drei unterschiedliche Frequenzen, die aufgrund der Phasenverschiebung durch die unterschiedlichen Längen der Antennenleitungen in unterschiedliche Richtungen abstrahlen, wie dies auf der rechten Seite dieser Figur erkennbar ist.

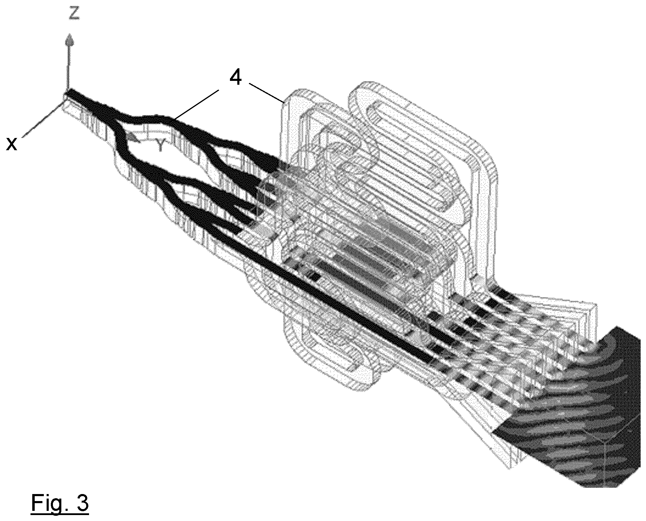

Im vorliegenden Beispiel verzweigt der Radarkanal das Radargeräts in acht Antennenleitungen 4 (Hohlleiter) unterschiedlicher Längen, die ein geradliniges Array aus acht nebeneinander angeordneten Leitungsenden bilden. Die Hohlleiter öffnen sich dabei zum Leitungsende hin vorzugsweise trichterförmig senkrecht zur Ausdehnung des Arrays, wie dies in Figur 3 zu erkennen ist. Figur 3 zeigt hierbei die Antenne aus den verzweigten Antennenleitungen 4 und eine momentane Feldverteilung des elektrischen Feldes in einer Ebene (in der Antenne und in abstrahlender Richtung) bei Einspeisung von Radarsignalen einer Frequenz, die nicht der Mittenfrequenz entspricht. Dadurch werden diese Radarsignale unter einem Winkel von in diesem Beispiel etwa 35° abgestrahlt, wie aus der Figur ersichtlich ist.

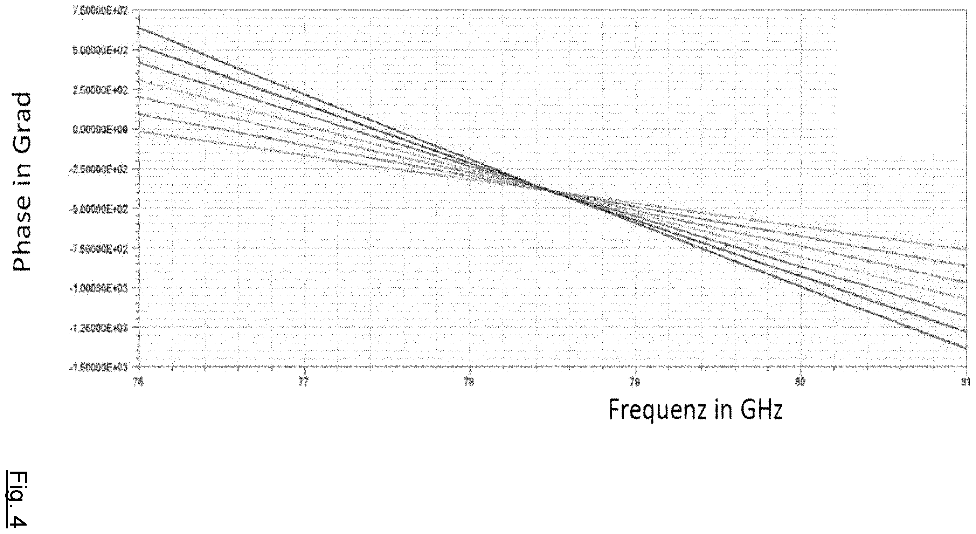

Die Frequenz kann dabei beispielsweise über einen Frequenzbereich von 76 GHz bis 81 GHz moduliert werden, also über eine Frequenzbandbreite von 5 GHz. Die acht Antennenleitungen unterscheiden sich bei diesem Frequenzbereich jeweils vorzugsweise um eine Länge, die der 3- oder der 4-fachen Mittenwellenlänge (bei 78,5 GHz) entspricht. Auf diese Weise wird ein horizontaler Abtastbereich hinter dem Fahrrad von etwa ±40° erreicht. Die Antennenleitungen selbst können dabei mit der Technik des Rapid Prototyping, insbesondere durch SLM (Selektives Laserschmelzen), hergestellt werden. Figur 4 zeigt hierzu ein Beispiel für den Phasenhub der einzelnen Leitungen in Abhängigkeit von der Frequenz.

Die vom Radar erfassten Informationen über Abstand und Winkel eines der detektierten Objekts werden von einem Mikrocontroller des Radargeräts verarbeitet. Diese Daten werden genutzt, um den Fahrradfahrer über die Nähe und Position von anderen Verkehrsteilnehmern zu informieren. Dies geschieht in der bevorzugten Ausgestaltung durch Vibrationen im rechten oder linken Griff des Fahrradlenkers. Je näher ein Objekt kommt, desto schneller vibriert der entsprechende Griff. Optional kann das System auch mit einem Spiegel und einem LED-Indikator (wie beim Totwinkel-Assistenten eines Autos) erweitert werden, der bei Unterschreitung eines bestimmten Abstands aktiviert wird. Die haptische Signalisierung über die Lenkergriffe ist besonders vorteilhaft für Fahrer mit eingeschränktem Hörvermögen, da das Feedback direkt durch Vibration, gegebenenfalls auch optisch über LED, weitergegeben wird und zum Blick in den Seitenspiegel auffordert. Die Information kann auch wahlweise an einem Board-Computer oder ein Smartphone mit einer entsprechenden Applikation dargestellt werden. Das vorgeschlagene System bietet eine innovative Lösung zur Steigerung der Sicherheit Zwei- oder Dreiradfahrern, insbesondere von Fahrradfahrern im Straßenverkehr, indem es modernste Radartechnologie nutzt und die Benutzerschnittstelle direkt in das Zwei- oder Dreirad integriert.

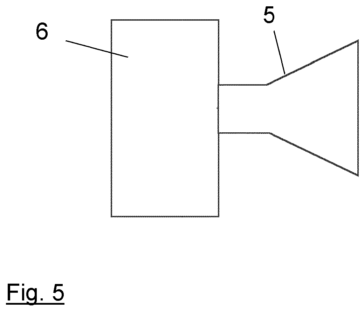

Figur 5 zeigt schließlich noch eine schematische Darstellung des Aufbaus des Radargeräts mit der Antenne 5, die die sich verzweigenden Antennenleitungen (vgl. Fig. 3) umfasst, und der Elektronik 6, in der das FMCW-Radar erzeugt und die Signalverarbeitung zur Detektion von Objekten und zur Bestimmung des Abstands und der Winkelposition der detektierten Objekte erfolgt. In dem Radargerät befindet sich auch eine geeignete Übertragungseinheit zur Übertragung der Information über ein detektiertes Objekt an die Signalisierungseinrichtung. Das Radargerät und - je nach Ausführung - auch die Signalisierungseinrichtung wird über einen am Fahrzeug angeordneten Akkumulator mit Energie versorgt. Bei zumindest teilweise elektrisch angetriebenen Fahrzeugen wird hierfür vorzugsweise der dann bereits am Fahrzeug für den elektrischen Antrieb vorhandene Akkumulator genutzt.

### Bezugszeichenliste

- 1: Fahrrad
- 2: Radarkeule
- 3: weiteres Fahrrad (Objekt)
- 4: Antennenleitungen
- 5: Antenne
- 6: Elektronik

## Patentansprüche

1. Verfahren zur Überwachung eines rückseitigen Bereiches eines Fahrzeugs (1), das einen Lenkerbügel mit Lenkergriffen aufweist, mittels Radar,
bei dem ein Radargerät (5, 6) am Fahrzeug (1) eingesetzt wird, das ein frequenzschwenkendes Radar (2) zur Abtastung des rückseitigen Bereiches einsetzt und mit einer Signalisierungseinrichtung verbunden ist,
wobei das Radargerät (5, 6) einen Radarkanal für die Aussendung von Radarsignalen aufweist, der sich auf mehrere Antennenleitungen (4) verzweigt, die sich in ihrer Länge um ein Vielfaches einer Mittenwellenlänge eines Frequenzbereichs unterscheiden, über den die Radarsignale moduliert werden, und
bei dem der rückseitige Bereich mit dem frequenzschwenkenden Radar (2) abgetastet und einem Fahrer des Fahrzeugs (1) bei Erfassung eines sich nähernden Objektes (3) über die Signalisierungseinrichtung eine Abstandsinformation und ein Winkelbereich vermittelt wird, unter dem sich das Objekt (3) von der Rückseite nähert.

2. Verfahren nach Anspruch 1,
**dadurch gekennzeichnet,**
**dass** die die Signalisierung haptisch und/oder optisch und/oder akustisch erfolgt.

3. Verfahren nach Anspruch 1 oder 2,
**dadurch gekennzeichnet,**
**dass** die Signalisierung durch Vibration der Lenkergriffe erfolgt, wobei eine Annäherung von der linken Rückseite durch Vibration des linken Lenkergriffes, eine Annäherung von der rechten Rückseite durch Vibration des rechten Lenkergriffes vermittelt wird.

4. Verfahren nach Anspruch 3,
**dadurch gekennzeichnet,**
**dass** die Abstandsinformation durch eine Frequenz oder eine Intensität der Vibration vermittelt wird, wobei eine höhere Frequenz oder Intensität einen geringeren Abstand als eine niedrigere Frequenz oder Intensität repräsentieren.

5. Verfahren nach einem der Ansprüche 1 bis 4,
**dadurch gekennzeichnet,**
**dass** die Signalisierung durch Lichtsignale von Lichtquellen, insbesondere LEDs, erfolgt, die am oder im Bereich des Lenkerbügels angeordnet sind, wobei eine Annäherung von der linken Rückseite durch Lichtsignale wenigstens einer auf der linken Seite angeordneten Lichtquelle und eine Annäherung von der rechten Rückseite durch Lichtsignale wenigstens einer auf der rechten Seite angeordneten Lichtquelle vermittelt wird.

6. Verfahren nach einem der Ansprüche 1 bis 5,
**dadurch gekennzeichnet,**
**dass** die Signalisierung über eine Anzeigeeinrichtung eines im Bereich des Lenkerbügels angeordneten mobilen oder integrierten Anzeigegeräts erfolgt, auf dem eine relative Position des detektierten Objekts relativ zum Fahrzeug (1) dargestellt wird.

7. Radargerät zur Überwachung eines rückseitigen Bereiches eines Fahrzeugs (1), das einen Lenkerbügel mit Lenkergriffen aufweist,
wobei das Radargerät (5, 6)
- einen Radarkanal für die Aussendung von Radarsignalen aufweist, der sich auf mehrere Antennenleitungen (4) verzweigt, die sich in ihrer Länge um ein Vielfaches einer Mittenwellenlänge eines Frequenzbereichs unterscheiden, über den die Radarsignale moduliert werden,
- einen Radarsender und einen Radarempfänger für die Erzeugung und den Empfang der Radarsignale,
- eine Auswerteeinrichtung, die empfangene Radarsignale auswertet, um ein sich annäherndes Objekt (3) zu erfassen und dessen relativen Abstand und Winkelbereich zu bestimmen, und
- eine Übertragungseinheit aufweist, durch die Informationen über den relativen Abstand und Winkelbereich eines detektierten Objekts (3) an eine Signalisierungseinrichtung übermittelt werden können.

8. Radargerät nach Anspruch 7,
**dadurch gekennzeichnet,**
**dass** sich die Antennenleitungen (4) in ihrer Länge um das 3-fache oder 4-fache der Mittenwellenlänge unterscheiden.

9. Radargerät nach Anspruch 7 oder 8,
**dadurch gekennzeichnet,**
**dass** sich der Radarkanal auf eine Anzahl von 2ⁿ Antennenleitungen (4) verzweigt.

10. Fahrzeug mit einem Lenkerbügel und Lenkergriffen, das ein Radargerät (5, 6) zur Überwachung eines rückseitigen Bereiches des Fahrzeugs mittels Radar gemäß einem oder mehreren der Patentansprüche 7 bis 9 und eine am Lenkerbügel angeordnete Signalisierungseinrichtung aufweist,
wobei die Signalisierungseinrichtung so ausgebildet ist, dass sie einem Fahrer des Fahrzeugs (1) bei Erfassung eines sich nähernden Objektes (3) durch das Radargerät (5, 6) eine Abstandsinformation und einen Winkelbereich vermittelt, unter dem sich das Objekt (3) von der Rückseite nähert.

11. Fahrzeug nach Anspruch 10,
**dadurch gekennzeichnet,**
**dass** die Signalisierungseinrichtung zwei Vibrationseinrichtungen aufweist, über die die Lenkergriffe in Vibration versetzt werden können, und so ausgebildet ist, dass die Signalisierung durch Vibration der Lenkergriffe erfolgt, wobei eine Annäherung von der linken Rückseite durch Vibration des linken Lenkergriffes und eine Annäherung von der rechten Rückseite durch Vibration des rechten Lenkergriffes vermittelt wird.

12. Fahrzeug nach Anspruch 11,
**dadurch gekennzeichnet,**
**dass** die Signalisierungseinrichtung so ausgebildet ist, dass die Abstandsinformation durch eine Frequenz oder eine Intensität der Vibration vermittelt wird, wobei eine höhere Frequenz oder Intensität einen geringeren Abstand als eine niedrigere Frequenz oder Intensität repräsentiert.

13. Fahrzeug nach einem der Ansprüche 10 bis 12,
**dadurch gekennzeichnet,**
**dass** die Signalisierungseinrichtung mehrere Lichtquellen aufweist, die am oder im Bereich des Lenkerbügels angeordnet sind, und so ausgebildet ist, dass die Signalisierung durch Lichtsignale der Lichtquellen erfolgt, wobei eine Annäherung von der linken Rückseite durch Lichtsignale wenigstens einer auf der linken Seite angeordneten Lichtquelle und eine Annäherung von der rechten Rückseite durch Lichtsignale wenigstens einer auf der rechten Seite angeordneten Lichtquelle vermittelt wird.

14. Fahrzeug nach einem der Ansprüche 10 bis 13,
**dadurch gekennzeichnet,**
**dass** die Signalisierungseinrichtung eine im Bereich des Lenkerbügels angeordnete Anzeigeeinrichtung aufweist und so ausgebildet ist, dass die Signalisierung durch eine Darstellung der relativen Position des detektierten Objekts (3) relativ zum Fahrzeug (1) auf der Anzeigeeinrichtung erfolgt.
